# EUROPÄISCHE PATENTSCHRIFT

(11) **EP 1 473 259 B1**
(45) Veröffentlichungstag und Bekanntmachung des Hinweises auf die Patenterteilung: **28.06.2006**
(21) Anmeldenummer: 04003073.6
(22) Anmeldetag: 11.02.2004
(51) Int. Cl.: B65G 15/12, B65G 21/06

(54) **Förderer zum Transportieren von Lastträgern**
Conveyor for transporting load carriers
Convoyeur permettant le transport de porte-charges

(30) Priorität: 24.04.2003 DE 10318621
(43) Veröffentlichungstag der Anmeldung: 03.11.2004
(73) Patentinhaber: SIEMENS AKTIENGESELLSCHAFT, 80333 München (DE)
(72) Erfinder: Bonifer, Edgar, 64839 Muenster (DE); D'Onofrio, Mario, 63179 Obertshausen (DE); Fuchs, Alexander, 61118 Bad Vilbel (DE); Kandziora, Johann, 61462 Königstein/Ts. (DE); Ketzer, Georg, 85635 Höhenkirchen-Siegertsbrunn (DE); Reck, Matthias, 64372 Ober-Ramstadt (DE); Reckemeier, Hartwig, 63110 Rodgau (DE); Sauer, Alexander, 63743 Aschaffenburg (DE)

(56) Entgegenhaltungen:
- EP-A- 0 858 961
- DE-C- 4 407 163
- DE-U- 8 901 800
- FR-A- 2 621 022
- US-A1- 2003 014 154

## Beschreibung

Die Erfindung betrifft einen Förderer zum Transportieren von Lastträgern, insbesondere standardisierten Paletten, Skids oder Behältern, mit auf dem Boden aufstehenden Rahmenteilen an denen im Abstand parallel zueinander Holme zur Aufnahme von antreibbaren Tragelementen angeordnet sind, die in Längsrichtung verlaufende Tragspuren für die auf den Tragelementen aufliegenden Lastträger bilden, wobei der Förderer aus modular aufgebauten Fördereinheiten zusammengesetzt ist und jedes Tragelement mindestens zweier seitlich beabstandeter Holme jeder Förderereinheit aus einem endlos umlaufenden Tragriemen besteht, der die Lastträger trägt und der sich seinerseits auf an den Holmen gelagerten, in Förderrichtung umlaufenden Tragrollen abstützt.

Bekannte Förderer dieser Art arbeiten als Rollenförderer oder Kettenförderer, je nachdem welcher Art die zu transportierenden Lastträger sind. Bei Palettenförderer kommen überwiegend Rollenförderer zum Einsatz, vor allem, wenn die Paletten in ihrer Längsrichtung transportiert werden. Werden die Paletten in Querrichtung transportiert, so werden üblicherweise Kettenförderer eingesetzt. Beide Förderprinzipien haben Nachteile, sowohl für den Hersteller als auch den Betreiber der Anlagen.

Da von dem Hersteller häufig beide Förderprinzipien, also für Längs- und Querförderung, bereitgehalten werden müssen, werden in Verbindung mit einer Vielzahl von erforderlicherweise bereitzuhaltender Antriebsvarianten die Anlage sehr teuer. Durch den großen Rollenabstand bei Rollenförderern werden die Paletten stark beansprucht, langfristig werden sie weich, da sich die Nägel, mit denen die Palettenteile zusammengehalten werden, beim Ablauf der Palette über die Rollen lockern.

Die Förderer, insbesondere die Kettenförderer, sind sehr laut. Kettenförderer benötigen außerdem zum Antrieb hohe Motorleistungen, da die Abtragung der Ketten reibend erfolgt. Zudem müssen die Ketten stets gefettet werden, dadurch ergeben sich Verunreinigungen der Paletten, weshalb in vielen Industriezweigen (z. B Automobilbereich) Kettenförderer gar nicht zugelassen sind. Darüber hinaus wird auch das Fördergut beim Transport stark beansprucht. Auch bei Kettenförderern sind viele Varianten an Antrieben und Übertrieben bereitzustellen, was letztendlich den Preis und die Wirtschaftlichkeit negativ beeinflußt. Trotzdem werden heute für die Längsförderung von Paletten vorwiegend Rollenförderer eingesetzt, während die Kettenförderer überwiegend der Querförderung der Paletten vorbehalten sind.

Aus der DE 44 07 163 C1 ist ein gattungsgemäßer Förderer bekannt geworden, der zum Transport von Parkpaletten für darauf abgestellte Kraftfahrzeuge Verwendung findet. Die Parkpaletten sind dabei auf dem Obertrum eines Endlosbandes abgelegt, das seinerseits um Umlenkrolen geführt und auf Stützrollen abgestützt ist. Der bekannte Förderer ist sowohl für Längs- als auch für Querförderung der Lastträger geeignet.

Der vorliegenden Erfindung liegt ausgehend von dem vorstehend beschriebenen Stand der Technik die Aufgabe zu Grunde, einen Förderer zum Transportieren von Lastträgern, insbesondere standardisierten Paletten, Skids oder Behältern zu schaffen, der bei geräuscharmen Transport einen hohen Durchsatz auch von großen Lasten ermöglicht und der vor allem kostengünstig sowohl bei der Herstellung als auch bei der Montage vor Ort einsetzbar ist.

Zur Lösung der Aufgabe wird erfindungsgemäß vorgeschlagen, dass jeder Holm aus einem Tragprofil und einer darauf auswechselbar aufgesetzten Leiste zusammengesetzt ist, in der die Tragrollen für den Tragriemen gelagert sind, wobei das Tragprofil jedes Holmes im Querschnitt C-förmig und die auf das Tragprofil aufsetzbare Leiste im Querschnitt U-förmig ausgebildet sind und die Tragrollen für den Tragriemen in den Schenkeln des U-Profils der Leiste in engem Achsabstand zueinander angeordnet sind.

Der erfindungsgemäße Förderer besteht aus modular aufgebauten Förderereinheiten, die baukastenartig zusammengesetzt sind und die Lastträger auf mindestens zwei Tragspuren abtragen, die beide aus Tragriemen bestehen, die ihrerseits auf Tragrollen abgetragen werden. Der auf Tragrollen abgetragene Tragriemen ersetzt die nachteiligen Ketten und die die Lastträger verschleißenden Rollen, auf denen die Lastträger bisher direkt abgetragen wurden und schafft somit ein Tragelement, das nicht nur sehr leise ist, sondern das auch in vorteilhafter Weise universell sowohl für Quer- als auch für Längsförderung der Lastträgers einsetzbar ist. Die Abstände der Tragrollen sollten vorzugsweise kleiner als die kleinste Fußbreite des Lastträgers sein. Das U-Profil eignet sich zur Schaffung einer "Rollenleiste" besonders gut, da die Schenkel zur Lagerung der Rollen dienen können, während die Grundseite des U-Profil's der Befestigung der Leiste auf dem Tragprofil dient.

Verunreinigungen, wie sie im Zusammenhang mit der Förderung auf Ketten unvermeidbar waren, treten bei der erfindungsgemäßen Lösung nicht mehr auf, die Lastträger werden sehr schonend transportiert, ohne dass das Transportgut nachteilig beansprucht wird. Der modulare Aufbau der Förderer und der Fördereinheiten ermöglicht eine sehr kostengünstige Fertigung durch Vormontage der Fördereinheiten, die vor Ort zu dem Förderer zusammensetzbar sind.

Der Holm ist in zwei Bauteile aufgeteilt, von denen das eine, das Tragprofil, die Tragfunktion eines Rahmenteils hat und das andere, die Leiste, die Funktion des Tragelementes für den Lastträger, in dem die zum Abtragen des Lastträger vorsehenden Bauteile (Tragrollen und Tragriemen) der auswechselbaren Leiste zugeordnet sind, die auf das Tragprofil aufsetzbar und leicht wieder entfernbar ist. Auf diese Weise wird es möglich, nach Bedarf unterschiedliche Tragelemente auf ein und denselben universell gestalteten Holm aufzusetzen, beschädigte Tragelemente leicht und schnell auszutauschen und verschlissene oder beschädigte Tragriemen problemlos zu wechseln. Dieses angewandte Baukastenprinzip erhöht die Freiheit in der Zusammenstellung unterschiedlicher Fördereinheiten deutlich, so können Kundenwünsche sehr leicht und kostengünstig individuell erfüllt werden, weil durch bloßes Zusammenfügen unterschiedlicher Tragelemente mit ein und demselben Tragprofil verschiedene Fördereinheiten geschaffen werden können. Die unterschiedliche Breite der Förderer lässt sich durch baukastenartig zur Verfügung gestellte Rahmenteile erreichen, dadurch wird die Anzahl der insgesamt verwendeten Bauteile geringer, was die Lagerhaltungskosten und die Herstellkosten bis hin zu den Montagekosten deutlich reduziert.

In einer vorzugsweisen Ausgestaltung der Erfindung ist vorgesehen, dass die Tragriemen als Zahnriemen ausgebildet sind, deren an der Unterseite angeordneten Zähne zur Übertragung des Antriebsmomentes in die entsprechend ausgebildeten Zähne mindestens eines Antriebszahnrades eingreifen. Der Zahnriemen eignet sich besonders gut als Tragriemen einer Förderereinheit nach der Erfindung, weil mit ihm die notwendige Zugkraft auf den Tragriemen aufgebracht werden kann, die erforderlich ist, um auch schwere Lastträger zu transportieren. Wenigstens ein Antriebsrad reicht aus, um bei entsprechender Motorleistung schwere Lastträger auf den beiden Tragspuren der Förderereinheit zu bewegen.

Die Holme können erfindungsgemäß einfach und preiswert aus einem Stahl-Rollprofil oder gekantetem Blech geformt sein, vorzugsweise wird so ein torsionssteifes geschlossenes Profil gebildet. Wenn aber nach einem weiteren Merkmal der Erfindung vorgesehen ist, dass die Holme der modular aufgebauten Fördereinheit aus einem Aluminium-Strangpressprofil geformt sind, so ergibt sich eine besonderes stabile und funktionelle Lösung, deren Vorteile, die später noch eingehend beschrieben werden, die gegenüber Blechholmen erhöhten Herstellkosten mehr als kompensieren. Darüber hinaus können heute Aluminium-Strangpressprofile beliebig geformt sein, wobei eine größere Freiheit in der Formgebung besteht, als dies bei abgekanteten Blechen möglich ist. Die Aluminium-Strangpressprofile können, im Gegensatz zu Blechkantprofilen auch unlackiert eingesetzt werden, weil die Oberfläche des Aluminiumprofils ohne Nachbearbeitung ansprechend aussieht.

Der Holm ist in zwei Bauteile aufgeteilt, von denen das eine, das Tragprofil, die Tragfunktion eines Rahmenteils hat und das andere, die Leiste, die Funktion des Tragelementes für den Lastträger, in dem die zum Abtragen des Lastträger vorsehenden Bauteile (Tragrollen und Tragriemen) der auswechselbaren Leiste zugeordnet sind, die auf das Tragprofil aufsetzbar und leicht wieder entfernbar ist. Auf diese Weise wird es möglich, nach Bedarf unterschiedliche Tragelemente auf ein und denselben universell gestalteten Holm aufzusetzen, beschädigte Tragelemente leicht und schnell auszutauschen und verschlissene oder beschädigte Tragriemen problemlos zu wechseln. Dieses angewandte Baukastenprinzip erhöht die Freiheit in der Zusammenstellung unterschiedlicher Fördereinheiten deutlich, so können Kundenwünsche sehr leicht und kostengünstig individuell erfüllt werden, weil durch bloßes Zusammenfügen unterschiedlicher Tragelemente mit ein und demselben Tragprofil verschiedene Fördereinheiten geschaffen werden können. Die unterschiedliche Breite der Förderer lässt sich durch baukastenartig zur Verfügung gestellte Rahmenteile erreichen, dadurch wird die Anzahl der insgesamt verwendeten Bauteile geringer, was die Lagerhaltungskosten und die Herstellkosten bis hin zu den Montagekosten deutlich reduziert.

In einer Ausgestaltung ist vorgesehen, dass das Tragprofil mindestens an einer seiner Längsseiten offen ist. Ein solches Profil ist ausreichend tragfähig für den angestrebten Zweck und hat weitere Vorteile, die später noch beschrieben werden.

Es ist aber gleichsam erfindungsgemäß auch denkbar, das Tragprofil jedes Holmes im Querschnitt C-förmig auszubilden und an dem Tragprofil zwei in Längsrichtung parallel beabstandet verlaufende senkrechte Bleche zu befestigen, zwischen denen die Tragrollen für den Tragriemen gelagert sind.

Eine konstruktiv besonders günstige und zu bevorzugende Lösung der Erfindung sieht vor, bei Verwendung einer U-förmigen Leiste diese mit der Öffnung nach unten auf das Tragprofil aufzusetzen und mit diesem zu verschrauben und die Tragrollen mit ihren Laufflächen für den Tragriemen durch in der Leiste vorgesehene Ausnehmungen nach oben herausragen zu lassen.

Dieses System ist besonders stabil und funktionell, die Stirnseiten der Schenkel der U-förmigen Leiste können auf entsprechenden Stützflächen des Tragprofils aufliegen, die Ausnehmungen im Grund des umgekehrt eingebauten U-Profiles ermöglichen den Tragrollen das Abtragen des Gurtes auf dem Bereich der Tragrollen, der aus den Ausnehmungen herausragt; gleichzeitig aber verschließen die Bereiche des U-Profil's neben den Ausnehmungen die Leiste und schützen somit den Bereich zwischen den Tragrollen vor unbeabsichtigten Eingriffen oder vor dem Hereinfallen von irgendwelchen Teilen. Die auf dem Tragprofil aufsitzenden Schenkel der U-förmigen Leiste lassen sich leicht am Tragprofil mit Schrauben befestigen und sind dadurch umgekehrt sehr leicht zu lösen.

Darüber hinaus ermöglicht das Tragprofil, insbesondere wenn es aus dem Aluminium-Strangpressprofil hergestellt ist, in Längsrichtung jedes Holmes verlaufende T-Nuten vorzusehen, die zur Befestigung von Rahmenteilen, Antriebsteilen, Initiatoren, Steuerungen und/oder der U-förmigen Leiste vorgesehen sind. Diese T-Nuten sind sehr individuell einsetzbar und ermöglichen mit herkömmlichen Befestigungselementen wie Hammerkopfschrauben oder dergleichen eine einfache und sichere Festlegung der Bauteile gegenüber dem Tragprofil.

Ein ganz besonderer Vorteil der Erfindung ist darin zu sehen, dass jeweils mindestens zwei Holme mit den Rahmenteilen und Stützfüßen zu einer von mehreren baugleichen autarken Fördereinheiten zusammenfügbar sind, in die jeweils mindestens ein Antrieb und Steuerelemente für die Tragelemente dieser einen Fördereinheit integriert sind, die mit weiteren Antrieben und Steuerungen dieser oder benachbarter Fördereinheiten steuerungstechnisch verknüpfbar sind.

Erfindungsgemäß lassen sich so die die Beschleunigungs- und Bremsprozesse zwischen vorhergehenden und nachfolgenden Förderereinheiten synchronisieren. Dadurch muß der Beschleunigungs- und Bremsweg nicht in einer Fördererlänge enthalten sein, wodurch sehr kurze Förderereinheiten möglich werden.

Der große Vorteil der erfindungsgemäßen Lösung besteht dem gemäß in der Schaffung baugleicher autarker Fördereinheiten, die durch ihren modularen Aufbau leicht und preiswert vorgefertigt herstellbar sind und die komplett ausgerüstet mit eigenen Antrieben autark betreibbar sind. Durch Zusammenstellungen mehrerer dieser Fördereinheiten entsteht ein Förderer, der gegenüber herkömmlichen Förderern die Prozesskosten in der Produktion und Applikation drastisch reduziert. Insbesondere die Montagekosten, aber auch die Transportkosten lassen sich mit einem erfindungsgemäßen "Baukasten"-Förderer deutlich senken, die Variabilität in der Erstellung von Anlage wird durch das modulare Baukastensystem nahezu unbegrenzt ermöglicht.

In einer weiteren Ausgestaltung der Erfindung ist vorgesehen, dass zur Bildung von drei Tragspuren jede Förderereinheit drei parallele Holme mit Tragelementen enthält, von denen mindestens die beiden äußeren Tragelemente die erfindungsgemäßen auf Tragrollen abgestützten Tragriemen aufweisen. Ein Förderer mit derartig gestalteten Förderereinheiten könnte das Problem lösen, das beispielsweise bei mit schwerem Fördergut beladenen Paletten auftreten kann, wenn diese lediglich auf zwei Tragspuren im Außenkantenbereich der Paletten aufliegen. Dann nämlich kann die Palette sich in Folge der Last durchbiegen und brechen. Die mittlere der drei Tragspuren kann die Paletten zusätzlich unterstützen, wobei die mittlere Tragspur grundsätzlich wie die äußeren Tragspuren gestaltet und ggf. angetrieben sein kann, es ist aber auch denkbar diese Spur ohne eigenen Antrieb mitlaufen zu lassen.

Alternativ ist es im Rahmen der Erfindung auch denkbar, dass von drei Tragspuren nur die Tragelemente der mittleren Tragspur antreibbar sind

Besonders günstig ist es, wenn mindestens eines der C-förmigen Tragprofile der Holme mit der Öffnung nach außen an den Rahmenteilen montiert ist und der mit einer Abdeckplatte verschließbare Hohlraum innerhalb des C-förmigen Tragprofiles als Kabelkanal und/oder zur Aufnahme elektrischer oder elektronischer Bauteile gestaltet ist.

Hier zeigt sich der besondere Vorteil des C-förmigen Tragprofiles, dessen Innenhohlraum trotz ausreichender Stabilität des Tragprofiles für Einbauten genutzt werden kann. Dieser Hohlraum ist jederzeit problemlos zugänglich, was für Reparatur- und Wartungsarbeiten von großer Bedeutung ist. Nach außen kann der Hohlraum durch eine Abdeckplatte verschlossen werden, die farblich gestaltet und gegebenenfalls mit Firmenlogo oder Werbung versehen sein kann.

Die Erfindung lässt sich dann besonders wirtschaftlich einsetzen, wenn jede autarke Förderereinheit hinsichtlich ihrer Längen- und Breitenmaße gerinfügig größer als die Abmessungen eines einzelnen zu transportierenden Lastträgers ist. Das bedeutet, dass die Fördereinheiten sehr kurz und kompakt gebaut sind, was einerseits Transport und Montage erleichtert und andererseits die Flexibilität beim Zusammenstellen eines Förderers erhöht.

Wie bereits ausgeführt sind die Fördereinheiten autark mit eigenen Antrieben gestaltet. Erfindungsgemäß besteht der Antrieb für ein Tragelement aus einer im Endbereich an das Tragprofil anschraubbaren vorgefertigten Antriebsstation mit integriertem Motor, Getriebe und Antriebskette oder -Riemen sowie einem fliegend gelagerten Antriebszahnrad, um das der Tragriemen umgelenkt ist und dessen Scheitel in der Tragebene der Tragrollen angeordnet ist.

Die Antriebsstation lässt sich, wie auch die anderen Bauteile der modularen Förderereinheit leicht und einfach an das Tragprofil anflanschen und mit Schrauben, vorzugsweise in den dort vorgesehenen T-Nuten befestigen. Auch die Antriebsstation kann vorgefertigt bereitgestellt sein, was im Wartungs- und Schadensfall einen leichten Austausch und Zugang ermöglicht. Das fliegend gelagerte Antriebszahnrad ermöglicht den Ausbau des Tragriemens ohne dass das Antriebszahnrad entfernt werden muss. Dabei erfolgt der Ausbau des Tragriemens nach der der Antriebsstation abgewandten Seite der Förderereinheit. Das Antriebszahnrad ist so angeordnet, dass es gleichzeitig als Tragrolle für den Tragriemen dient, es bildet mit den anderen Tragrollen der Tragrollenleiste eine Förderebene.

Es ist aber nach einem anderen Merkmal der Erfindung auch möglich dass der Motor und das Getriebe direkt an das fliegend gelagerte Antriebszahnrad angeflanscht werden.

Sollte es aus Gründen der Kraftübertragung erforderlich sein, dass Antriebszahnrad mit einem stark gegenüber den Tragrollen der Tragleiste vergrößerten Durchmesser auszubilden, so ist nach einem weiteren Merkmal der Erfindung vorgesehen, dass zwischen dem Antriebszahnrad und der unmittelbar benachbarten Tragrolle und/oder dem Antriebs- bzw Umlenkrad der benachbarten Förderereinheit eine im Durchmesser kleinere Schonrolle angeordnet ist. Diese Schonrolle verhindert, dass der Tragriemen in den größeren Spalt zwischen Antriebszahnrad und der benachbarten Tragrolle eintaucht.

Das Spannen des Tragriemens zwischen dem Antriebszahnrad und dem am gegenüberliegenden Ende vorgesehenen Umlenkrad lässt sich sehr einfach dadurch bewerkstelligen, dass eine Relativverschiebung zwischen der Leiste und dem Antriebszahnrad herbeigeführt wird. Am einfachsten wird die Leiste mit den darin gelagerten Tragrollen im Bereich ihrer Befestigung (in der T-Nut) gelöst und in Längsrichtung am Holm bei feststehendem Antriebszahnrad von diesem weg verschoben. Sobald der Tragriemen gespannt ist, wird die Leiste wieder am Tragprofilen festgeschraubt. Für diesen Vorgang eignen sich die Befestigungen der Leiste mit Hammerkopfschrauben in den T-Nuten besonders.

Das Spannen des Tragriemens kann aber alternativ auch durch eine im Untertrum vorgesehene Spannrolle erfolgen

Vorzugsweise ist jedem Tragelement eine eigene Antriebsstation mit Motor zugeordnet und die Motoren aller Antriebsstationen einer Förderereinheit sind über eine elektronische Welle miteinander synchronisiert. Durch diese Lösung können sehr einfache, preiswerte und leichte Motoren eingesetzt werden, weil jeder diesen Motoren nur eine Tragspur einer Förderereinheit antreiben muss. Die elektrische Welle gestattet den Gleichlauf aller Tragspuren, so dass ein Schrägstellen oder Verkanten des Lastträgers vermieden wird.

Wenn erfindungsgemäß mindestens zwei Tragelementen einer Förderereinheit jeweils eine eigene Antriebsstation mit Motor zugeordnet sind und die Antriebsstationen zur Erzielung einer Differenzgeschwindigkeit der Tragelemente unterschiedlich ansteuerbar sind, so können auch ungewollt entstandene Schrägstellungen der Lastträger dadurch zurückgeführt werden, dass die eine Tragspur gegenüber der anderen mit höherer oder niedriger Geschwindigkeit kurzzeitig angetrieben wird. Dies entspricht dem Prinzip der Lenkung eines Kettenfahrzeugs.

Zur Vereinfachung ist es aber auch denkbar, den Antrieb mindestens zweier Tragelemente einer Förderereinheit über einen gemeinsamen Motor erfolgen zu lassen und die Antriebsräder der Tragelemente über eine mechanische Welle miteinander zu verbinden. Der einzusetzende Motor muss dann eine entsprechend höhere Leistung als die Einzelmotoren aufweisen; diese Lösung kann bei bestimmten Anwendungen Vorteile aufweisen.

Der als Zahnriemen ausgebildete Tragriemen weist an seiner Unterseite neben zum Antrieb des Tragriemens verzahnten Bereichen auch glatte Bereiche auf, die zum Abtragen der auf dem Tragriemen aufliegenden Last auf den Tragrollen aufliegen. Auf diese Weise kann einerseits die hohe Antriebsleistung über den verzahnten Bereich übertragbar werden und andererseits sichergestellt werden, dass auch hohe Lasten über den Tragriemen auf den Tragrollen abgestützt werden können. Die verzahnten Bereichen können sowohl als Normverzahnung, als auch als Sonderverzahnung ausgestaltet sein, bei der die Zahnbreiten größer als die Zahnlücken sind.

Entsprechend dem Vorschlag der Erfindung ist es denkbar, die verzahnten Bereiche des als Zahnriemen ausgebildeten Tragriemens in in Umfangsrichtung verlaufenden Nuten der Antriebsräder und/oder Tragrollen aufzunehmen. So kann beispielsweise ein mittlerer verzahnter Bereich in Nuten der Tragrollen geführt sein, während die gleichgroßen seitlichen Bereiche unmittelbar auf den Tragrollen abgetragen werden. Das Antriebszahnrad greift unmittelbar in die verzahnten Bereiche der Tragriemen ein.

Um die teilweise sehr hohen erforderlichen Zugkräfte in die Tragriemen einleiten zu können, sind diese nach einem anderen Merkmal der Erfindung mit die Zugfestigkeit erhöhenden Armierungen versehen. Solche Armierungen können beispielsweise eingebettete Stahldrähte, Kevlarseile oder Gewebe aus derartigen oder anderen festen Werkstoffen bestehen.

Um zu verhindern, dass die Lastträger auf dem Tragriemen durchrutschen, ist nach einem weiteren Merkmal der Erfindung vorgesehen, den Tragriemen mit einer traktionserhöhenden Oberseite zu versehen. Dies kann ein auf der Oberseite des Tragriemens vorgesehenes Profil in der Art eines Autoreifens sein, wobei das Profil die Umlenkbarkeit des Tragriemens um die Umlenk- bzw. Antriebsrollen nicht behindert darf.

Günstigerweise soll das Profil derartig gestaltet sein, dass Traktion in Längsrichtung des Tragriemens möglichst hoch und in Querrichtung möglichst gering ist. Der Grund dafür ist die sich manchmal ergebende Notwendigkeit, die Mitnahme des Lastträgers in Transportrichtung unter allen Bedingungen sicherzustellen, aber gleichzeitig zu ermögliche, sich schräg stellende Lastträger manuell oder mechanisch auf dem Traggurt durch Einwirkung von Querkräften gerade zu rücken.

Nach günstigen Merkmalen der Erfindung wird vorgeschlagen, die Verzahnung des Tragriemens auf dessen Unterseite pfeilförmig, halbmondförmig, durchgängig gerade oder unterbrochen auszubilden, weil dieser Art der Verzahnung ein störungsfreies Abtragen auch auf glatten Tragrollen ermöglicht. Die profilierte Oberfläche kann verschleißen, wie das Profil eines Autoreifens, d.h., der Tragriemen wird ausgewechselt, wenn er verschlissen ist.

Zusätzlich können nach einem weiteren Merkmal der Erfindung die Tragrollen und/oder die Antriebszahnräder mit Bordscheiben zur Führung des Tragriemens und/oder des Lastträgers ausgebildet sein. Diese Bordscheiben ermöglichen bei ihrer Anwendung im Zusammenhang mit der vorliegenden Erfindung sowohl einen Geradeauslauf der Tragriemen wie auch gegebenenfalls die Sicherstellung, dass Paletten oder andere Lastträger sich nicht auf dem Förderer schräg stellen. Die Antriebszahnräder können ballig, trapezförmig oder ballig-zylindrisch ausgebildet sein, um einen günstigen Ablauf des Tragriemens zu gewährleisten.

Besonders günstig wird es im Zusammenhang mit der vorliegenden Erfindung angesehen, dass es möglich ist, die modular aufgebauten Förderereinheiten komplett vormontiert und endgeprüft am Einsatzort zu dem gewünschten Förderer zusammenzustellen. Die dadurch eingesparten Montage- und Rüstzeiten in Verbindung mit den vereinfachten modularen Bauelemente stellen eine beachtliche Kostenersparnis dar, die auch nicht durch die Verwendung teurerer Komponenten kompensiert wird.

Der Aufbau der Förderereinheit aus modularen Bauteilen, insbesondere den Leisten, in denen die Tragrollen für den Tragriemen gelagert sind und den an den Rahmenteilen angeschraubten Tragprofilen, ermöglicht in sehr vorteilhafter Weise auch eine beliebige Verkürzung dieser Teile im Raster der Tragrollen. So lassen sich bei Bedarf Förderereinheiten mit kürzeren Abmessungen, als die der Standartbauteile erstellen. Auf diese Weise kann beispielsweise die letzte Förderereinheit eines aus mehreren dieser Förderereinheiten zusammengestellten Förderers verkürzt werden, wenn die räumlichen Bedingungen das erforderlich machen. In diesem Fall würden die Leisten und die Tragprofile einfach abgesägt, die Befestigungen an den Rahmenteilen werden davon nicht berührt, weil diese ohnehin an den Profilen, beispielsweise in Form der T-Nuten vorgesehen sind.

Die Montage Der Förderereinheiten zum Förderer ist denkbar einfach, weil erfindungsgemäß die Holme der Förderereiheiten an ihren einander zugewandten Enden über Bleche mit rasterförmigen Befestigungsbohrungen miteinander verbindbar sind. Die Bleche sind an den C-förmigen Öffnungen der Holme ausgeschnitten, damit die in den Ausnehmungen gebildeten Kabelkanäle nicht unterbrochen werden. Durch das Bohrungsraster sind Variationen in der Breite der Bleche möglich.

Insgesamt wird mit der Erfindung ein neuartiger Förderer zum Transportieren von Lastträgern geschaffen, der aufgrund seiner modularen Bauweise und des Plattformkonzeptes deutliche Vorteile gegenüber dem Stand der Technik aufweist. So läßt sich mit der Erfindung nur ein universelles Förderprinzip für Längs- und Querförderung verwirklichen. Elektronik und Kabelführung sind in den Förderereinheiten integriert, eine Verbindung mehrerer Förderereinheiten kann in einfacher Weise durch Steckverbindungen eines BUS-Systemes erfolgen. Die autarken Förderer sind über eine Steuerung miteinander verknüpfbar, so dass ein intelligenter Förderer geschaffen wird. Nur noch wenige Bauteile ermöglichen eine einfache Variantenbildung. Alle Antriebe der Förderereinheiten sind gleich, was die Beschaffungs- und Lagerhaltungskosten vermindert und Reparatur und Wartung erleichtert. In der Produktion und Applikation des Förderers lassen sich die Prozesskosten drastisch reduzieren, die Fertigungsdurchlaufzeiten der Förderereinheiten sind sehr kurz. Der Förderer selbst ist gegenüber bekannten Förderern sehr leise; er weist trotzdem eine hohe Traktion auf, so dass mit mehr Last pro Meter Förderer ein höherer Durchsatz erzielbar ist. Die kürzeren Einheiten lassen sich durch elektronische Kopplung zu einem beliebig langen Förderer zusammenstellen.

Ein Ausführungsbeispiel der Erfindung ist in der Zeichnung vorgesehen und wird nachfolgend beschrieben. Es zeigt:
- Figur 1: das Tragelement einer modular aufgebauten Förderereinheit in der Seitenansicht und Draufsicht,
- Figur 2: einen Querschnitt durch eine erfindungsgemäße Förderereinheit,
- Figur 3: einen vergrößerten Querschnitt durch den Holm einer Förderereinheit im Bereich der Tragrolle,
- Figur 4: einen vergrößerten Querschnitt durch den Holm einer Förderereinheit im Bereich der Antriebsstation,
- Figur 5: einen Längsschnitt durch einen Tragriemenabschnitt,
- Figur 6: Draufsichten auf die Tragseiten verschieden ausgebildeter Tragriemenabschnitte,
- Figur 7: Querschnitte durch verschieden ausgebildete Verzahnungen des Tragriemens,
- Figur 8: einen aus modularen Fördereinheiten zusammengesetzten Förderer in der Seitenansicht,
- Figur 9: die Schnittstelle zweier benachbarter baugleicher Fördereinheiten mit Antrieb in vergrößerter Darstellung,
- Figur 10: eine vergrößerte Darstellung der Verbindung zweier benachbarter Förderereinheiten,
- Figur 11: einen Querschnitt durch eine erfindungsgemäße Förderereinheit im Bereich der Antriebsstationen,
- Figur 12: eine Draufsicht auf die Förderereinheit nach Figur 11,
- Figur 13: eine vergrößerte Darstellung der Antriebsstation einer Förderereinheit,
- Figur 14: den Querschnitt durch eine erfindungsgemäße Förderereinheit im Bereich der Antriebsstation mit mechanischer Welle und
- Figur 15: eine Draufsicht auf die Förderereinheit nach Figur 14.

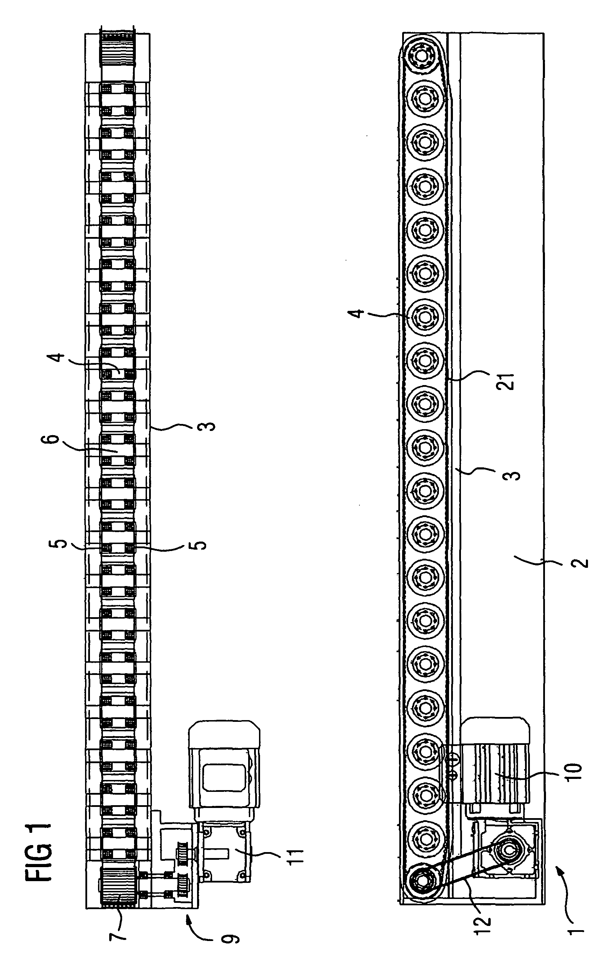

In Figur 1 ist insgesamt mit 1 bezeichnet ein Tragelement einer erfindungsgemäßen Förderereinheit isoliert in der Seitenansicht (unten) und in der Draufsicht (oben) dargestellt. In der Zeichnungsfigur erkennt man ein Tragprofil 2 des Holmes einer Fördereinheit, von denen mindestens zwei seitlich beabstandete Tragprofile 2 zu einer Fördereinheit gehören. Auf das Tragprofil 2 ist auswechselbar die Leiste 3 aufgesetzt, die (in hier nicht dargestellter Weise) mit dem Tragprofil 2 verbunden ist. In der Leiste 3 sind die mit 4 bezeichneten Tragrollen gelagert und zwar in Kugellagern 5 auf einer Welle 6, die beidseitig in der Leiste 3 gehalten wird. In dem Ausführungsbeispiel sind insgesamt 18 Tragrollen 4 in der Leiste 3 angeordnet, den Abschluss bilden zwei verzahnte Rollen 7 und 8, von denen die Rolle 7 zu einer Antriebsstation 9 gehört, die aus dem Motor 10, dem Getriebe 11, der Antriebskette 12 und dem Antriebszahnrad 7 selbst besteht. Diese Antriebsstation 9 ist in der Draufsicht schematisch erkennbar Über die Tragrollen und die zwei verzahnten Rollen 7 und 8 ist ein Tragriemen 21 geführt, der später noch ausführlicher beschrieben wird.

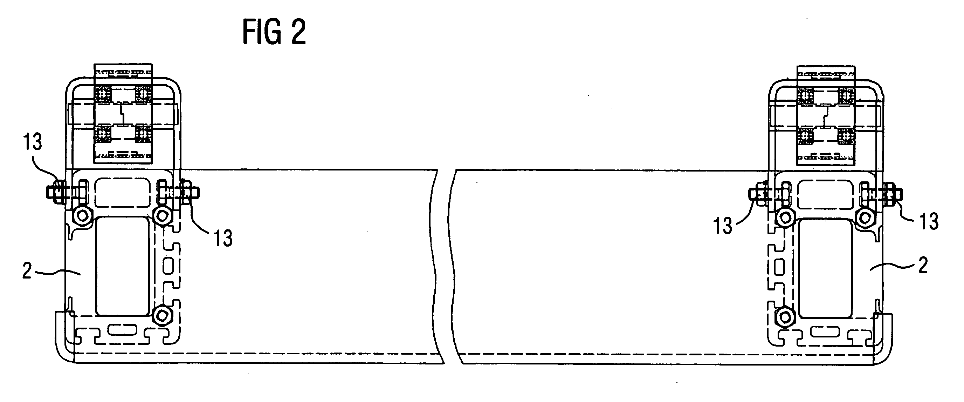

In Figur 2 ist ein Querschnitt durch die Förderereinheit schematisch dargestellt, erkennbar besteht jedes Tragprofil 2 aus einem C-förmigen Strangpressprofil, auf das die U-förmig gestaltete Leiste 3 aufgesetzt ist, wobei das "U" umgedreht ist, so dass die Öffnung des U-förmigen Profils nach unten zeigt. Beide Tragprofile 2 und beide Leisten 3 sind gleich gestaltet, die Verschraubung zwischen der Leiste 3 und dem Tragprofil 2 erfolgt über Hammerkopfschrauben 13, die in T-Nuten des aus Aluminium bestehenden Tragprofiles 2 eingesetzt sind und Bohrungen in den Schenkeln der U-förmigen Leiste 3 durchdringen.

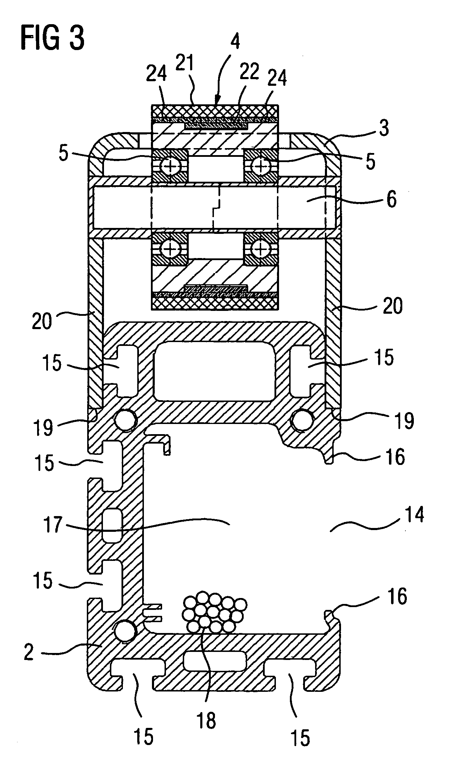

In die Figur 3 ist ein Querschnitt durch das Tragprofil 2 vergrößert dargestellt. Hier ist deutlich erkennbar, dass das Tragprofil 2 im Querschnitt C-förmig gestaltet und mit einer nach rechts weisenden Öffnung 14 gestaltet ist und dass das Tragprofil 2 mit einer Mehrzahl von in Längsrichtung verlaufenden T-Nuten 15 versehen ist, die der Befestigung von Anbauteilen dienen. Des weiteren ist, wie auf der rechten Seite des C-förmigen Tragprofils erkennbar ist, der Öffnungsbereich 14 mit Rücksprüngen 16 im Tragprofil 2 versehen, die eine Auflage für eine (nicht dargestellte) Verschlussplatte bildet, mit der die Öffnung 14 des Tragprofils 2 verschließbar ist. Der im Tragprofil 2 gebildete Hohlraum 17 ist zur Aufnahme von Kabelbäumen 18, Steuerungsteilen Initiatoren oder dgl. geeignet, so dass diese Teile leicht erreichbar installiert werden können und bei Bedarf, ggf. nach vorhergehendem Entfernen der Abdeckung problemlos zugänglich sind.

Im oberen Bereich des Tragprofils 2 ist beidseitig je ein Absatz 19 gebildet, der als Auflage für die U-förmige Leiste 3 dient, wobei diese mit ihren Schenkeln 20 stirnseitig dort aufgesetzt werden kann. Die Befestigung erfolgt über die von den Schenkeln 20 der U-förmigen Leiste 3 übergriffenen T-Nuten 15 mittels (in Figur 2 dargestellter) Hammerkopfschrauben 13. Die U-förmige Leiste 3 selbst nimmt in den beiden Schenkeln 20 die Achsen 6 für die Tragrollen 4 auf, die auf diesen Achsen 6 mittels Kugellagern 5 gelagert sind. Auf der Tragrolle 4 in Figur 3 ist der als Zahnriemen ausgebildete Tragriemen 21 erkennbar, dessen im mittleren Bereich stegförmig vorgesehene Verzahnung 22 in Vertiefungen bzw. umlaufenden Ausnehmungen 23 der Tragrolle 4aufgenommen wird, so dass die beidseitig davon gebildeten glatten Unterseiten 24 des Tragriemens 21 auf der glatten Oberfläche der Tragrolle 4 abtragbar sind. Die Gestaltung des Tragriemens 21 wird später noch beschrieben.

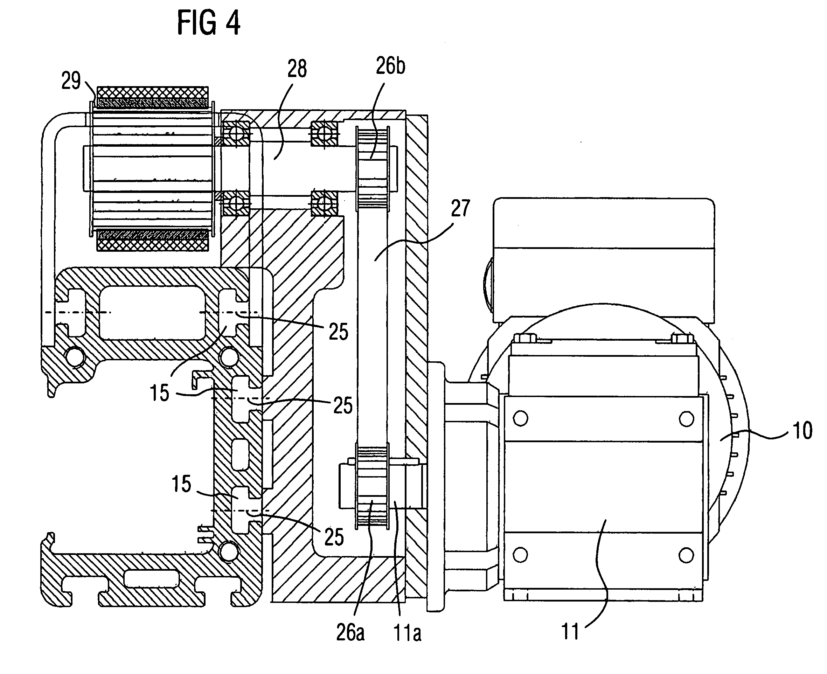

In Figur 4 ist in einer vergrößerten Darstellung ein Schnitt durch die Antriebsstation 9 dargestellt, die mittels nicht dargestellter Hammerkopfschrauben bei 25 ebenfalls an den T-Nuten 15 im Tragprofil 2 befestigt ist. Die Antriebsstation 9 besteht aus dem Motor 10, dem Getriebe 11 und einem Getriebeausgang 11a mit mit einen Kettenrad 26a, das über eien Kette 27 mit dem Kettenrad 26b verbunden ist, das auf der Welle 28 des fliegend gelagerten Antriebszahnrades 7 befestigt ist. Die zuletzt beschriebenen Bauteile sind in einem Gehäuse 29 angeordnet, dass an dem Tragprofil 2 so angeflanscht ist, dass das fliegend gelagerte Antriebszahnrad 7 das Tragprofil 2 übergreift und in einer Position fixiert ist, in der das Antriebszahnrad 7 kopfseitig vor der Leiste 2 angeordnet ist. Die Höhenausrichtung des Antriebszahnrades 7 ist so gewählt, dass der Scheitel 29 des Antriebszahnrades 7 in der Tragebene der Tragrollen 4 liegt, so dass das Antriebszahnrad 7 gleichzeitig die Funktion einer Tragrolle 4 übernimmt. Das gleiche gilt für das Umlenkzahnrad 8 am entgegengesetzten Ende der Leiste 2.

Die fliegende Anordnung des Antriebszahnrades 7 ermöglicht den Ausbau eines beschädigten oder verschlissenen Tragriemens 21 nach entfernen der Antriebstation 9 und der Leiste 3 ohne aufwendige Demontage . Da das Antriebszahnrad 7 Teil der Antriebsstation 9 ist, die mit dem Tragprofil 2 verbunden ist, aber nicht Teil der die Tragrollen 4 aufnehmenden Leiste 3, kann durch Lösen der Befestigungsschrauben 13 in den T-Nuten 15 die Leiste 3 in Längsrichtung des Tragprofiles 2 verschoben werden und somit der Tragriemen 21 um das Antriebszahnrad 7 und das am Ende der Leiste 2 gelagerte Umlenkzahnrad 8 gespannt werden.

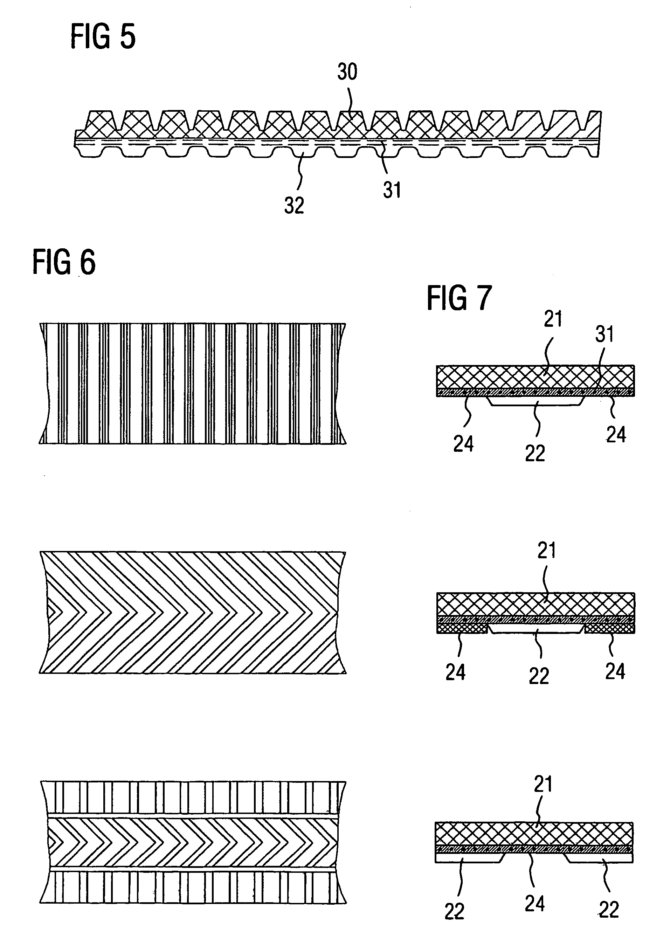

In Figur 5 ist in schematischer Darstellung ein Längsschnitt durch einen Abschnitt des Tragriemens 21 dargestellt. Erkennbar sind auf der Oberseite des Tragriemens 21 stollenförmige Profilierungen 30 vorgesehen, die der Erhöhung der Traktion des Tragriemens 21 dienen. Die Profilierungen 30 können aus einem Material mit einem hohen Reibwert bestehen, beispielsweise aus Gummi. Wie an den unterbrochenen Linien 31 längs im Tragriemen 21 erkennbar ist, soll dieser mit einem zugkraftverstärkenden Mittel armiert sein, beispielsweise sind Drahtlitzen in den Tragriemen einvulkanisiert. An der Unterseite des Tragriemens 21 sind die Verzahnungen 32 erkennbar, die zum Aufbringen der Antriebskraft auf den Tragriemen 21 erforderlich sind und die in die entsprechenden Verzahnungen des Antriebszahnrades 7 formschlüssig eingreifen.

Wie die Alternativen der Figur 6, bei der es sich um Draufsichten auf die Oberseiten des Tragriemens 21 handelt, zeigen, können die Profilierungen 30 der Oberfläche des Tragriemens 21 unterschiedlich ausgeführt sein, so sind einfach rechtwinklig zur Transportrichtung verlaufende Querstollen (obere Darstellung) ebenso denkbar, wie Pfeilprofile (mittlere Darstellung) oder, wie in der unteren Darstellung gezeigt, Profile, die in der Art eines Autoreifenprofils gestaltet sind.

Figur 7 zeigt, dass auch die Verzahnung 22 auf der Unterseite des Tragriemens 21 unterschiedlich gestaltet sein kann, so ist es denkbar, einen mittleren stegförmigen Zahnbereich vorzusehen (obere Darstellung), neben den beidseitig glatte Bereiche 24 gebildet werden, die auf den Tragrollen 4 abgetragen werden können. Eine Variante ist in der mittleren Darstellung zu erkennen. Hier sind glatte Bereiche 24 aufvulkanisiert, die es ermöglichen, die Tragrolle 4 glatt zylindrisch zu gestalten. In der unteren Darstellung ist die Verzahnung 22 geteilt und beidseitig der Mittellängsachse des Tragriemens 21 angeordnet; in diesem Fall kann das Abtragen des Tragriemens 21 auf den Tragrollen 4 im mittleren unverzahnten Bereich des Tragriemens 21 erfolgen.

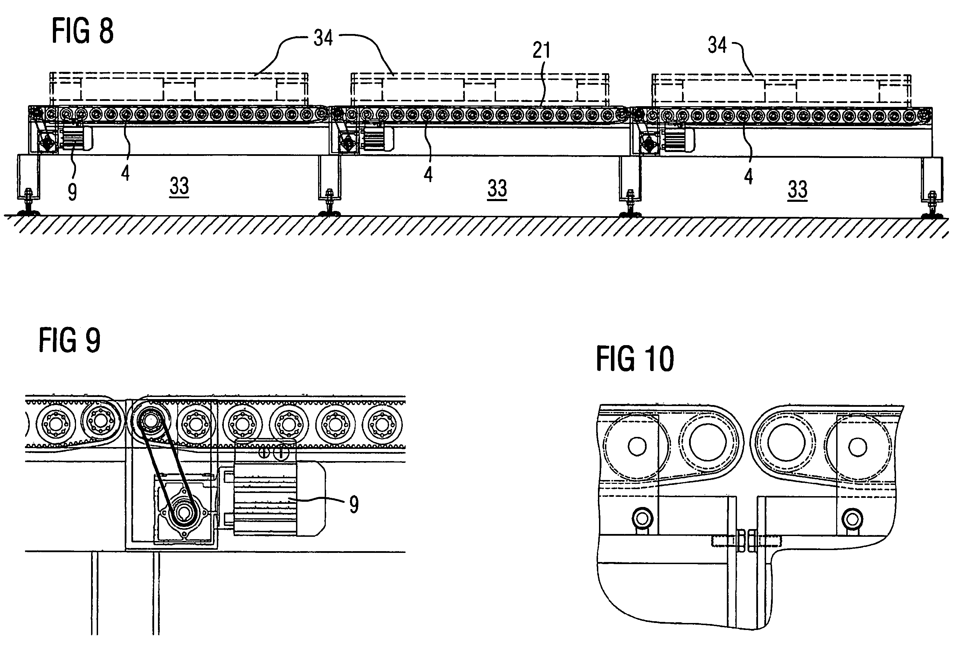

In Figur 8 ist dargestellt, wie drei mit 33 bezeichnete Förderereinheiten der Erfindung zu einem Förderer zusammengestellt sind. Jede Förderereinheit 33 ist vollkommen autark ausgebildet und enthält neben den Tragrollen 4 in den Leisten 3 mit dem umlaufenden Tragriemen 21 eigene Antriebsstationen 9. Alle Förderereinheiten 33 sind baugleich, ihrer Länge entspricht etwa der Länge einer DIN-Palette, die strichpunktiert auf dem Förderer bei 34 angedeutet ist.

In Figur 9 ist in vergrößerter Ausschnittdarstellung gezeigt, wie zwei Förderereinheiten 33 eines Förderers nebeneinander aufstellbar sind, so dass sie eine gemeinsame Förderebene bilden. Figur 10 zeigt, dass beide Förderereinheiten miteinander verschraubt werden können, um den gemeinsamen Förderer zu bilden.

Vorteilhafterweise lassen sich die Förderereinheiten 33 vormontiert ab Werk zum Aufstellplatz transportieren, wobei die kurze Baulänge von Vorteil ist. Dort werden die Förderereinheiten 33 nur noch zusammengeschraubt, die Kabelsteckverbindung verbunden und der Förderer ist nach Einschalten des Betriebsstroms einsatzbereit.

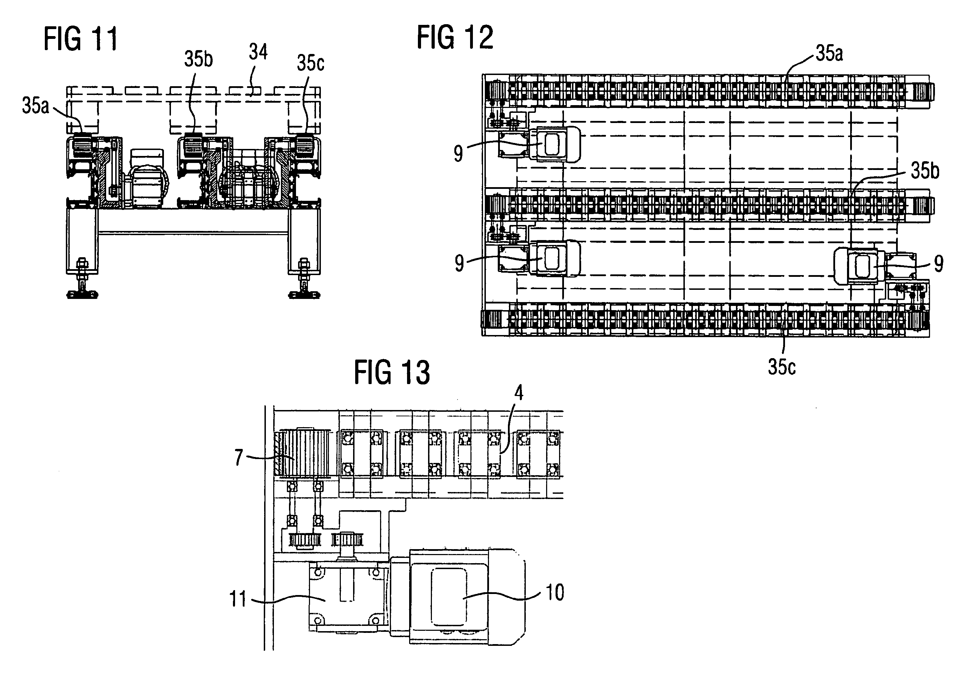

Figur 11 zeigt einen Querschnitt durch eine Förderereinheit 33 mit drei Tragspuren 35a, 35b und 35c, von denen jede Tragspur durch eine separate Antriebsstation 9 antreibbar ist. Die Antriebsstationen 9 sind über eine elektronische Welle miteinander verknüpft, so dass ein Gleichlauf der drei Tragriemen 21 der Tragspuren 35a, 35b und 35c gewährleistet ist. Durch entsprechende Steuerung der äußeren Antriebsstationen 9 können Geschwindigkeitsdifferenzen beim Umlauf der Tragriemen 21 der Tragspuren 35a und 35b eingestellt werden, mit dem Ziel, schräg stehende Lastträger 34 nach dem Prinzip der Lenkung eines Raupenkettenfahrzeuges gerade zu rücken.

Figur 13 zeigt noch einmal eine vergrößerte Draufsicht auf eine der baugleich ausgeführten Antriebsstationen 9, erkennbar ist auch hier der Motor 10 , das Getriebe 11 und das fliegend gelagerte Antriebszahnrad 7.

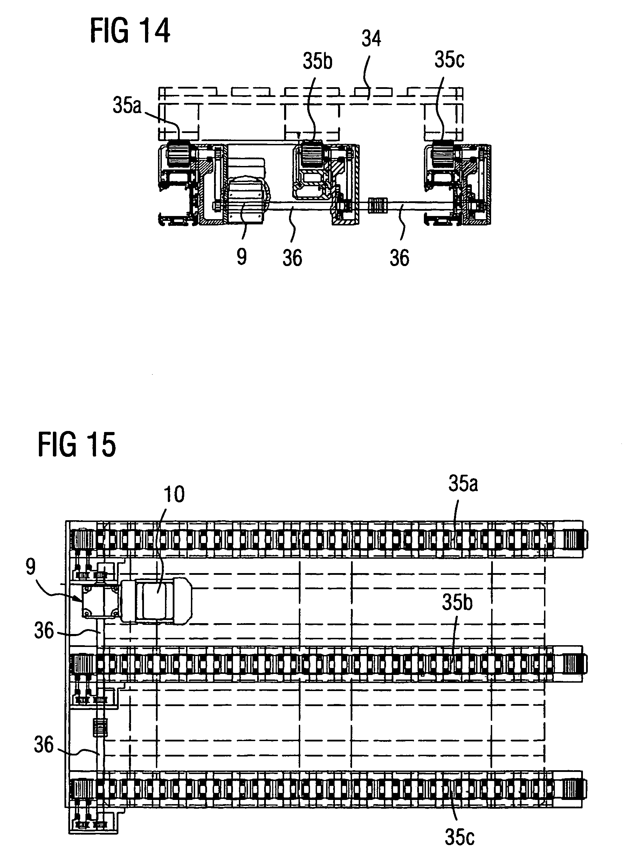

In Figur 14 ist eine andere Förderereinheit 33 im Querschnitt dargestellt, bei der ebenfalls drei Tragspuren 35a, 35b und 35c vorgesehen sind. In diesem Beispiel ist nur eine einzige Antriebsstation 9 mit einem stärkeren Motor 10 vorgesehen, der über eine mechanische Welle 36 alle drei Tragriemen 21 der Tragspuren 35a, 35b und 35c synchron antreibt.

Figur 15 zeigt eine Draufsicht auf die Förderereinheit 33 nach Figur 14, gleiche Teile sind gleich bezeichnet.

## Patentansprüche

1. Förderer zum Transportieren von Lastträgern (34), insbesondere standardisierten Paletten, Skids oder Behältern, mit auf dem Boden aufstehenden Rahmenteilen an denen im Abstand parallel zueinander Holme zur Aufnahme von antreibbaren Tragelementen (1) angeordnet sind, die in Längsrichtung verlaufende Tragspuren für die auf den Tragelementen (1) aufliegenden Lastträger (34) bilden, wobei der Förderer aus modular aufgebauten Fördereinheiten (33) zusammengesetzt ist und jedes Tragelement mindestens zweier seitlich beabstandeter Holme jeder Förderereinheit (33) aus einem endlos umlaufenden Tragriemen (21) besteht, der die Lastträger (34) trägt und der sich seinerseits auf an den Holmen gelagerten, in Förderrichtung umlaufenden Tragrollen (4) abstützt,
**dadurch gekennzeichnet dass** jeder Holm aus einem Tragprofil (2) und einer darauf auswechselbar aufgesetzten Leiste (3) zusammengesetzt ist, in der die Tragrollen (4) für den Tragriemen (21) gelagert sind, wobei das Tragprofil (2) jedes Holmes im Querschnitt C-förmig und die auf das Tragprofil (2) aufsetzbare Leiste (3) im Querschnitt U-förmig ausgebildet sind und die Tragrollen (4) für den Tragriemen (21) in den Schenkeln (20) des U-Profils der Leiste (3) in engem Achsabstand zueinander angeordnet sind.

2. Förderer nach Anspruch 1,
**dadurch gekennzeichnet,**
**dass** die Tragriemen (21) als Zahnriemen ausgebildet sind, deren an der Unterseite angeordneten Zähne (22) zur Übertragung des Antriebsmomentes in die entsprechend ausgebildeten Zähne mindestens eines Antriebszahnrades (7) eingreifen.

3. Förderer nach Anspruch 1,
**dadurch gekennzeichnet,**
**dass** die Holme (Tragprofil 2) aus einem Stahl-Rollprofil oder gekantetem Blech geformt sind.

4. Förderer nach Anspruch 1,
**dadurch gekennzeichnet,**
**dass** die Holme (Tragprofil 2) aus einem Aluminium-Strangpressprofil geformt sind.

5. Förderer nach Anspruch 1 bis 4,
**dadurch gekennzeichnet,**
**dass** das Tragprofil (21) jedes Holmes im Querschnitt C-förmig ausgebildet ist und an dem Tragprofil zwei in Längsrichtung parallel beabstandet verlaufende senkrechte Bleche befestigt sind, zwischen denen die Tragrollen (4) für den Tragriemen (21) gelagert sind.

6. Förderer nach Anspruch 1,
**dadurch gekennzeichnet,**
**dass** die U-förmige Leiste (3) mit der Öffnung nach unten auf das Tragprofil (2) aufsetzbar und mit diesem verschraubbar ist und die Tragrollen (4) mit ihren Laufflächen für den Tragriemen (21) durch in der Leiste (3) vorgesehene Ausnehmungen nach oben herausragen.

7. Förderer nach einem der Ansprüche 4 bis 6,
**dadurch gekennzeichnet,**
**dass** das Tragprofil (2) jedes Holmes mit in Längsrichtung verlaufenden T-Nuten (15) versehen ist, die zur Befestigung von Rahmenteilen, Antriebsteilen, Initiatoren, Steuerungen und/oder der U-förmigen Leiste (3) vorgesehen sind.

8. Förderer nach einem der Ansprüche 1 bis 7,
**dadurch gekennzeichnet,**
**dass** jeweils mindestens zwei Holme (Leiste 3 und Tragprofil 2) mit den Rahmenteilen und Stützfüßen zu einer von mehreren baugleichen autarken Förderereinheiten (33) zusammenfügbar sind, in die jeweils mindestens ein Antrieb (Antriebsstation 9) und Steuerelemente für die Tragelemente dieser einen Förderereinheit (33) integriert sind, die mit weiteren Antrieben (Antriebsstation 9) und Steuerungen dieser oder benachbarter Förderereinheiten (33) steuerungstechnisch verknüpfbar sind.

9. Förderer nach Anspruch 8,
**dadurch gekennzeichnet,**
**dass** die Beschleunigungs- und Bremsprozesse zwischen vorhergehenden und nachfolgenden Förderereinheiten (33) synchronisierbar ist.

10. Förderer nach einem der Ansprüche 1 bis 9,
**dadurch gekennzeichnet,**
**dass** zur Bildung von drei Tragspuren (35a, 35b und 35c) jede Förderereinheit (33) drei Holme (Leiste 3 und Tragprofil 2) mit Tragelementen enthält, von denen mindestens die beiden äußeren Tragelemente auf Tragrollen (4) abgestützte Tragriemen (21) aufweisen.

11. Förderer nach einem der Ansprüche 1 bis 10,
**dadurch gekennzeichnet,**
**dass** von drei Tragspuren (35a, 35b und 35c) nur die Tragelemente der mittleren Tragspur antreibbar sind.

12. Förderer nach nach Anspruch 5,
**dadurch gekennzeichnet,**
**dass** mindestens eines der C-förmigen Tragprofile (2) der Holme mit der Öffnung (14) nach außen an den Rahmenteilen montiert ist und der mit einer Abdeckplatte verschließbare Hohlraum (17) innerhalb des C-förmigen Tragprofiles (2) als Kabelkanal und/oder zur Aufnahme elektrischer oder elektronischer Bauteile gestaltet ist.

13. Förderer nach einem der Ansprüche 1 bis 12,
**dadurch gekennzeichnet,**
**dass** jede autarke Förderereinheit (33) hinsichtlich ihrer Längen- und Bereitenmaße gerinfügig größer als die Abmessungen eines einzelnen zu transportierenden Lastträgers (34) ist.

14. Förderer nach einem der Ansprüche 1 bis 13,
**dadurch gekennzeichnet,**
**dass** der Antrieb für ein Tragelement aus einer im Endbereich an das Tragprofil (2) anschraubbaren vorgefertigten Antriebsstation (9) mit integriertem Motor (10), Getriebe (11) und Antriebskette oder -riemen (27) sowie einem fliegend gelagerten Antriebszahnrad (7) besteht, um das der Tragriemen (21) umgelenkt ist und dessen Scheitel (29) in der Tragebene der Tragrollen (4) angeordnet ist.

15. Förderer nach einem der Ansprüche 1 bis 14,
**dadurch gekennzeichnet,**
**dass** der Motor und das Getriebe direkt an das fliegend gelagerte Antriebszahnrad (7) angeflanscht sind.

16. Förderer nach einem der Ansprüche 1 bis 15,
**dadurch gekennzeichnet,**
**dass** das Antriebsrad (7) größer als die Tragrollen (4) ist und zwischen dem Antriebszahnrad (7) und der unmittelbar benachbarten Tragrolle (4) und/oder dem Antriebs- bzw Umlenkrad der benachbarten Förderereinheit (33) eine im Durchmesser kleinere Schonrolle angeordnet ist.

17. Förderer nach einem der Ansprüche 1 bis 16,
**dadurch gekennzeichnet,**
**dass** das Spannen des Tragriemens (21) durch Relativverschiebung der Leiste (3) gegenüber dem Antriebszahnrad (7) durchführbar ist.

18. Förderer nach einem der Ansprüche 1 bis 17,
**dadurch gekennzeichnet,**
**dass** das Spannen des Tragriemens (21) durch eine im Untertrum vorgesehene Spannrolle erfolgt.

19. Förderer nach einem der Ansprüche 1 bis 18,
**dadurch gekennzeichnet,**
**dass** jedem Tragelement eine eigene Antriebsstation (9) mit Motor (10) zugeordnet ist und die Motoren (10) aller Antriebsstationen (9) einer Förderereinheit (33) über eine elektronische Welle miteinander synchronisiert sind.

20. Förderer nach einem der Ansprüche 1 bis 19,
**dadurch gekennzeichnet,**
**dass** mindestens zwei Tragelementen einer Förderereinheit (33) jeweils eine eigene Antriebsstation (9) mit Motor (10) zugeordnet sind und die Antriebsstationen (9) zur Erzielung einer Differenzgeschwindigkeiten der Tragelemente unterschiedlich ansteuerbar sind.

21. Förderer nach einem der Ansprüche 1 bis 20,
**dadurch gekennzeichnet,**
**dass** der Antrieb mindestens zweier Tragelemente einer Förderereinheit (33) über einen gemeinsamen Motor (10) erfolgt und die Antriebsräder (7) der Tragelemente über eine mechanische Welle (36) miteinander verbunden sind.

22. Förderer nach einem der Ansprüche 1 bis 21,
**dadurch gekennzeichnet,**
**dass** der als Zahnriemen ausgebildete Tragriemen (21) an seiner Unterseite neben zum Antrieb des Tragriemens (21) verzahnten Bereichen (22), glatte Bereiche (24) aufweist, die zum Abtragen der auf dem Tragriemen (21) aufliegende Last auf den Tragrollen (4) aufliegen.

23. Förderer nach einem der Ansprüche 1 bis 22,
**dadurch gekennzeichnet,**
**dass** der verzahnten Bereichen (22) mit einer Normverzahnung versehen ist.

24. Förderer nach einem der Ansprüche 1 bis 23,
**dadurch gekennzeichnet,**
**dass** der verzahnten Bereichen (22) mit einer Sonderverzahnung versehen ist, bei der die Zahnbreiten größer als die Zahnlücken sind.

25. Förderer nach einem der Ansprüche 1 bis 24,
**dadurch gekennzeichnet,**
**dass** die verzahnten Bereiche des als Zahnriemen ausgebildeten Tragriemens (21) in in Umfangsrichtung verlaufenden Nuten der Antriebsräder (7) und/oder Tragrollen (4) aufgenommen werden.

26. Förderer nach einem der Ansprüche 1 bis 25,
**dadurch gekennzeichnet,**
**dass** der Tragriemen (21) mit die Zugfestigkeit erhöhenden Armierungen (31) versehen ist.

27. Förderer nach Anspruch 26,
**dadurch gekennzeichnet,**
**dass** die Armierungen (31) aus eingebettetem Stahldraht, Kevlar oder Gewebe aus derartigen oder anderen zugfesten Werkstoffen bestehen.

28. Förderer nach einem der Ansprüche 1 bis 27,
**dadurch gekennzeichnet,**
**dass** der Tragriemen (21) mit einer traktionserhöhenden Oberseite versehen ist.

29. Förderer nach Anspruch 28,
**dadurch gekennzeichnet,**
**dass** die Oberseite des Tragriemens (21) mit einen Profil (30) in der Art eines Autoreifens versehen ist.

30. Förderer nach Anspruch 29,
**dadurch gekennzeichnet,**
**dass** das Profil (30) derartig gestaltet ist, dass die Traktion in Längsrichtung möglichst hoch und in Querrichtung möglichst gering ist.

31. Förderer nach Anspruch 29 und 30,
**dadurch gekennzeichnet,**
**dass** das Profil (30) pfeilförmig, halbmondförmig, durchgängig gerade oder unterbrochen ausgebildet ist.

32. Förderer nach einem der Ansprüche 1 bis 31,
**dadurch gekennzeichnet,**
**dass** die Tragrollen (4) und/oder die Antriebszahnräder (7) mit Bordscheiben zur Führung des Tragriemens (21) und/oder des Lastträgers (34) ausgebildet sind.

33. Förderer nach einem der Ansprüche 1 bis 32,
**dadurch gekennzeichnet,**
**dass** die Antriebszahnräder (7) ballig, trapezförmig oder ballig-zylindrisch ausgebildet sind.

34. Förderer nach einem der Ansprüche 1 bis 33,
**dadurch gekennzeichnet,**
**dass** die modular aufgebauten Fördereinheiten (33) komplett vormontiert und endgeprüft am Einsatzort zu dem Förderer zusammenstellbar sind.

35. Förderer nach einem der Ansprüche 1 bis 34,
**dadurch gekennzeichnet,**
**dass** die Leisten (3), in denen die Tragrollen (4) für den Tragriemen (21) gelagert sind und die Tragprofile (2) verkürzbar sind, so dass die Länge der Fördereinheiten (33) variierbar ist.

36. Förderer nach einem der Ansprüche 1 bis 35,
**dadurch gekennzeichnet,**
**dass** die Holme der Förderereiheiten (33) an ihren einander zugewandten Enden über Bleche mit rasterförmigen Befestigungsbohrungen miteinander verbindbar sind.

37. Förderer nach einem der Ansprüche 1 bis 36,
**dadurch gekennzeichnet,**
**dass** die Bleche an den C-förmigen Öffnungen der Holme ausgeschnitten sind.

## Claims

1. Conveyor for transporting load carriers (34), in particular standardized pallets, skids or containers, having frame parts which stand on the floor and on which are arranged load-bearing members which are spaced apart parallel to one another and are intended for accommodating drivable load-bearing elements (1) which form longitudinally running load-bearing tracks for the load carriers (34) resting on the load-bearing elements (1), the conveyor being made up of modular-construction conveying units (33), and each load-bearing element of at least two laterally spaced-apart load-bearing members of each conveyor unit (33) comprising an endlessly circulating load-bearing belt (21), which bears the load carriers (34) and, for its part, is supported on load-bearing rollers (4) which are mounted on the load-bearing members and circulate in the conveying direction, **characterized in that** each load-bearing member is made up of a load-bearing profile (2) and a bar (3), which is positioned in an exchangeable manner on the load-bearing profile and in which the load-bearing rollers (4) for the load-bearing belt (21) are mounted, the load-bearing profile (2) of each load-bearing member being cross-sectionally C-shaped and the bar (3), which can be positioned on the load-bearing profile (2), being of cross-sectionally U-shaped design and the load-bearing rollers (4) for the load-bearing belt (21) being arranged, with a small distance between their centres, in the legs (20) of the U-profile of the bar (3).

2. Conveyor according to Claim 1, **characterized in that** the load-bearing belts (21) are designed as toothed belts, of which the teeth (22) arranged on the underside, for the purpose of transmitting the driving torque, engage in the correspondingly designed teeth of at least one driving gearwheel (7).

3. Conveyor according to Claim 1, **characterized in that** the load-bearing members (load-bearing profile 2) are formed from a rolled steel profile or angled sheet metal.

4. Conveyor according to Claim 1, **characterized in that** the load-bearing members (load-bearing profile 2) are formed from an extruded aluminium profile.

5. Conveyor according to Claim 1 to 4, **characterized in that** the load-bearing profile (2) of each load-bearing member is of cross-sectionally C-shaped design, and fastened on the load-bearing profile are two vertical metal plates which are spaced apart parallel to one another in the longitudinal direction and between which the load-bearing rollers (4) for the load-bearing belt (21) are mounted.

6. Conveyor according to Claim 1, **characterized in that** the U-shaped bar (3) can be positioned on the load-bearing profile (2), and screwed to the latter, with the opening in the downward direction, and the load-bearing rollers (4) have their running surfaces for the load-bearing belt (21) projecting upward through cutouts provided in the bar (3).

7. Conveyor according to one of Claims 4 to 6, **characterized in that** the load-bearing profile (2) of each load-bearing member is provided with T-grooves (15) which run in the longitudinal direction and are provided for fastening frame parts, drive parts, initiators, control means and/or the U-shaped bar (3).

8. Conveyor according to one of Claims 1 to 7, **characterized in that** in each case at least two load-bearing members (bar 3 and load-bearing profile 2) can be joined together with the frame parts and supporting feet to form one of a number of autonomous conveyor units (33) of the same construction, in which are integrated in each case at least one drive (drive station 9) and control elements for the load-bearing elements of this one conveyor unit (33), it being possible for these to be linked in control terms to further drives (drive station 9) and control means of this or adjacent conveyor units (33).

9. Conveyor according to Claim 8, **characterized in that** it is possible to synchronize the accelerating and braking processes between preceding and following conveyor units (33).

10. Conveyor according to one of Claims 1 to 9, **characterized in that**, in order to form three load-bearing tracks (35a, 35b and 35c), each conveyor unit (33) contains three loading-bearing members (bar 3 and load-bearing profile 2) with load-bearing elements, of which at least the two outer load-bearing elements have load-bearing belts (21) supported on load-bearing rollers (4).

11. Conveyor according to one of Claims 1 to 10, **characterized in that**, of three load-bearing tracks (35a, 35b and 35c) only the load-bearing elements of the central load-bearing track can be driven.

12. Conveyor according to Claim 5, **characterized in that** at least one of the C-shaped load-bearing profiles (2) of the load-bearing members is installed on the frame parts with the opening (14) in the outward direction, and the cavity (17) within the C-shaped load-bearing profile (2), it being possible for said cavity to be closed by a covering plate, is configured as a cable duct and/or for accommodating electrical or electronic components.

13. Conveyor according to one of Claims 1 to 12, **characterized in that** each autonomous conveyor unit (33) is slightly larger, in respect of its length and width measurements, than the dimensions of an individual load carrier (34) which is to be transported.

14. Conveyor according to one of Claims 1 to 13, **characterized in that** the drive for a load-bearing element comprises a prefabricated drive station (9) which can be screwed onto the load-bearing profile (2) in the end region and has an integrated motor (10), gear mechanism (11) and drive chain or belt (27) and a driving gearwheel (7), which is mounted in a floating manner, about which the load-bearing belt (21) is deflected, and the top (29) of which is arranged in the load-bearing plane of the load-bearing rollers (4).

15. Conveyor according to one of Claims 1 to 14, **characterized in that** the motor and the gear mechanism are flanged directly onto the driving gearwheel (7), which is mounted in a floating manner.

16. Conveyor according to one of Claims 1 to 15, **characterized in that** the driving wheel (7) is larger than the load-bearing rollers (4), and a smaller-diameter guard roller is arranged between the driving gearwheel (7) and the directly adjacent load-bearing roller (4) and/or the driving or deflecting wheel of the adjacent conveyor unit (33).

17. Conveyor according to one of Claims 1 to 16, **characterized in that** the load-bearing belt (21) can be tensioned by displacement of the bar (3) relative to the driving gearwheel (7).

18. Conveyor according to one of Claims 1 to 18, **characterized in that** the load-bearing belt (21) is tensioned by a tensioning roller provided in the bottom strand.

19. Conveyor according to one of Claims 1 to 18, **characterized in that** each load-bearing element is assigned a dedicated drive station (9) with motor (10), and the motors (10) of all the drive stations (9) of a conveyor unit (33) are synchronized with one another via an electronic shaft.

20. Conveyor according to one of Claims 1 to 19, **characterized in that** at least two load-bearing elements of a conveyor unit (33) are each assigned a dedicated drive station (9) with motor (10), and the drive stations (9) can be activated differently in order to achieve a differential speed for the load-bearing elements.

21. Conveyor according to one of Claims 1 to 20, **characterized in that** at least two load-bearing elements of a conveyor unit (33) are driven via a common motor (10), and the driving wheels (7) of the load-bearing elements are connected to one another via a mechanical shaft (36).

22. Conveyor according to one of Claims 1 to 21, **characterized in that** the load-bearing belt (21), which is designed as a toothed belt, has on its underside, alongside regions (22) which are toothed in order to drive the load-bearing belt (21), smooth regions (24) which rest on the load-bearing rollers (4) in order to bear the load resting on the load-bearing belt (21).

23. Conveyor according to one of Claims 1 to 22, **characterized in that** the toothed region (22) is provided with a standard toothing formation.

24. Conveyor according to one of Claims 1 to 23, **characterized in that** the toothed region (22) is provided with a special toothing formation in which the tooth widths are larger than the tooth gaps.

25. Conveyor according to one of Claims 1 to 24, **characterized in that** the toothed regions of the load-bearing belt (21), which is designed as a toothed belt, are accommodated in circumferentially running grooves of the driving wheels (7) and/or load-bearing rollers (4).

26. Conveyor according to one of Claims 1 to 25, **characterized in that** the load-bearing belt (21) is provided with reinforcements (31) which increase the tensile strength.

27. Conveyor according to Claim 26, **characterized in that** the reinforcements (31) consist of embedded steel wire, Kevlar material or woven fabric made of such materials or other tension-resistant materials.

28. Conveyor according to one of Claims 1 to 27, **characterized in that** the load-bearing belt (21) is provided with a traction-increasing top side.

29. Conveyor according to Claim 28, **characterized in that** the top side of the load-bearing belt (21) is provided with a profile (30) in the manner of a vehicle tyre.

30. Conveyor according to Claim 29, **characterized in that** the profile (30) is configured such that the traction is as high as possible in the longitudinal direction and as low as possible in the transverse direction.

31. Conveyor according to Claims 29 and 30, **characterized in that** the profile (30) is designed to be arrow-shaped, half-moon-shaped or interrupted or rectilinear throughout.

32. Conveyor according to one of Claims 1 to 31, **characterized in that** the load-bearing rollers (4) and/or the driving gearwheels (7) are designed with flanged wheels for guiding the load-bearing belt (21) and/or the load carrier (34).

33. Conveyor according to one of Claims 1 to 32, **characterized in that** the driving gearwheels (7) are of convex, trapezoidal or convex-cylindrical design.

34. Conveyor according to one of Claims 1 to 33, **characterized in that** the modular-construction conveying units (33), completely preassembled and subjected to final testing, can be put together to form the conveyor at the use location.

35. Conveyor according to one of Claims 1 to 34, **characterized in that** the bars (3), in which the load-bearing rollers (4) for the load-bearing belt (21) are mounted, and the load-bearing profiles (2) can be shortened, with the result that it is possible to vary the length of the conveying units (33).

36. Conveyor according to one of Claims 1 to 35, **characterized in that** the load-bearing members of the conveyor units (33) can be connected to one another at their mutually facing ends via metal plates with fastening bores provided at unit spacings.

37. Conveyor according to one of Claims 1 to 36, **characterized in that** the metal plates are cut out at the C-shaped openings of the load-bearing members.

## Revendications

1. Convoyeur pour transporter des porte-charges (34), en particulier des palettes standardisées, des skids ou des récipients, comportant des éléments de châssis dressés sur le sol, sur lesquels sont disposés à distance parallèlement entre eux des montants destinés à recevoir des éléments (1) porteurs entraînables, qui forment des voies porteuses s'étendant en direction longitudinale pour les porte-charges (34) reposant sur les éléments (1) porteurs, le convoyeur étant composé d'unités (33) de convoyage à structure modulaire et chaque élément porteur d'au moins deux montants latéralement distants de chaque unité (33) de convoyage étant constitué d'une courroie (21) porteuse circulant sans fin, qui porte les porte-charges (34) et qui s'appuie elle-même sur des rouleaux (4) porteurs montés sur les montants et circulant dans la direction de convoyage,
**caractérisé en ce que** chaque montant est composé d'un profilé (2) porteur et d'une barre (3) placée sur ce profilé de manière interchangeable et dans laquelle sont montés les rouleaux (4) porteurs pour la courroie (21) porteuse, le profilé (2) porteur de chaque montant étant réalisé à section en C et la barre (3) pouvant être placée sur le profilé (2) porteur est réalisée à section en U, et que les rouleaux (4) porteurs pour la courroie (21) porteuse sont disposés dans les branches (20) du profil en U de la barre (3) à étroite distance d'axe en axe.

2. Convoyeur selon la revendication 1, **caractérisé en ce que** les courroies (21) porteuses sont réalisées sous forme de courroies dentées dont les dents (22) disposées sur le dessous engrènent, afin de transmettre le couple d'entraînement, dans les dents de forme correspondante d'au moins une roue (7) dentée d'entraînement.

3. Convoyeur selon la revendication 1, **caractérisé en ce que** les montants (profilé 2 porteur) sont formés à partir d'un profilé calandré d'acier ou de tôle pliée à vive arête.

4. Convoyeur selon la revendication 1, **caractérisé en ce que** les montants (profilé 2 porteur) sont formés à partir d'un profilé filé d'aluminium.

5. Convoyeur selon les revendications 1 à 4, **caractérisé en ce que** le profilé (2) porteur de chaque montant est réalisé à section en C et deux tôles verticales s'étendant à distance en parallèle en direction longitudinale sont fixées sur le profilé porteur, entre lesquelles sont montés les rouleaux (4) porteurs pour la courroie (21) porteuse.

6. Convoyeur selon la revendication 1, **caractérisé en ce que** la barre (3) en forme de U peut être placée avec l'ouverture vers le bas sur le profilé (2) porteur et assemblée par boulonnage à ce dernier, et les rouleaux (4) porteurs, par leurs surfaces de roulement pour la courroie (21) porteuse, dépassent vers le haut à travers des évidements prévus dans la barre (3).

7. Convoyeur selon l'une des revendications 4 à 6, **caractérisé en ce que** le profilé (2) porteur de chaque montant est pourvu de rainures (15) en T s'étendant en direction longitudinale, qui sont prévues pour la fixation d'éléments de châssis, d'éléments d'entraînement, de déclencheurs, de commandes et/ou de la barre (3) en forme de U.

8. Convoyeur selon l'une des revendications 1 à 7, **caractérisé en ce qu'**au moins deux montants (barre 3 et profilé 2 porteur) peuvent être chaque fois réunis avec les éléments de châssis et des pieds d'appui en l'une de plusieurs unités (33) de convoyage autonomes de construction identique dans chacune desquelles sont intégrés au moins un entraînement (poste 9 d'entraînement) et des éléments de commande pour les éléments porteurs de cette unité (33) de convoyage, qui peuvent être reliés aux fins de commande à d'autres entraînements (poste 9 d'entraînement) et commandes de cette unité (33) de convoyage ou d'unités (33) de convoyage voisines.

9. Convoyeur selon la revendication 8, **caractérisé en ce que** les processus d'accélération et de freinage entre des unités (33) de convoyage précédentes et suivantes peuvent être synchronisés.

10. Convoyeur selon l'une des revendications 1 à 9, **caractérisé en ce que**, afin de former trois voies (35a, 35 et 35c) porteuses, chaque unité (33) de convoyage comporte trois montants (barre 3 et profilé 2 porteur) pourvus d'éléments porteurs, parmi lesquels au moins les deux éléments porteurs extérieurs comportent des courroies (21) porteuses soutenues sur des rouleaux (4) porteurs.

11. Convoyeur selon l'une des revendications 1 à 10, **caractérisé en ce que**, parmi trois voies (35a, 35 et 35c) porteuses, seuls les éléments porteurs de la voie porteuse centrale peuvent être entraînés.

12. Convoyeur selon la revendication 5, **caractérisé en ce qu'**au moins un des profilés (2) porteurs en forme de C des montants est monté avec l'ouverture (14) vers l'extérieur sur les éléments de châssis, et la cavité (17) à l'intérieur du profilé (2) porteur en C, qui peut être fermée par une plaque de recouvrement, est conçue comme caniveau de câbles et/ou pour recevoir des composants électriques ou électroniques.

13. Convoyeur selon l'une des revendications 1 à 12, **caractérisé en ce que** chaque unité (33) de convoyage autonome est, quant à ses dimensions de longueur et de largeur, légèrement plus grande que les dimensions d'un porte-charge (34) individuel à transporter.

14. Convoyeur selon l'une des revendications 1 à 13, **caractérisé en ce que** l'entraînement pour un élément porteur est constitué d'un poste (9) d'entraînement préfabriqué, pouvant être boulonné dans la région terminale sur le profilé (2) porteur et intégrant un moteur (10), une transmission (11) et une chaîne ou courroie (27) d'entraînement, et d'une roue (7) dentée d'entraînement montée en porte à faux, autour de laquelle est renvoyée la courroie (21) porteuse et dont le sommet (29) est disposé dans le plan porteur des rouleaux (4) porteurs.

15. Convoyeur selon l'une des revendications 1 à 14, **caractérisé en ce que** le moteur et la transmission sont directement flasqués sur la roue (7) dentée d'entraînement montée en porte à faux.

16. Convoyeur selon l'une des revendications 1 à 15, **caractérisé en ce que** la roue (7) d'entraînement est plus grande que les rouleaux (4) porteurs, et un rouleau de surmultiplication de plus petit diamètre est disposé entre la roue (7) dentée d'entraînement et le rouleau (4) porteur directement voisin et/ou la roue d'entraînement ou de renvoi de l'unité (33) de convoyage voisine.

17. Convoyeur selon l'une des revendications 1 à 16, **caractérisé en ce que** la courroie (21) porteuse peut être tendue par une translation relative de la barre (3) par rapport à la roue (7) dentée d'entraînement.

18. Convoyeur selon l'une des revendications 1 à 17, **caractérisé en ce que** la courroie (21) porteuse est tendue par un galet tendeur prévu dans le brin inférieur.

19. Convoyeur selon l'une des revendications 1 à 18, **caractérisé en ce qu'**un propre poste (9) d'entraînement pourvu d'un moteur (10) est associé à chaque élément porteur, et les moteurs (10) de tous les postes (9) d'entraînement d'une unité (33) de convoyage sont synchronisés entre eux au moyen d'un arbre électronique.

20. Convoyeur selon l'une des revendications 1 à 19, **caractérisé en ce qu'**un propre poste (9) d'entraînement pourvu d'un moteur (10) est respectivement associé à au moins deux éléments porteurs d'une unité (33) de convoyage, et les postes (9) d'entraînement peuvent être différemment asservis afin d'obtenir une vitesse différentielle pour les éléments porteurs.

21. Convoyeur selon l'une des revendications 1 à 20, **caractérisé en ce que** l'entraînement d'au moins deux éléments porteurs d'une unité (33) de convoyage s'effectue au moyen d'un moteur (10) commun, et les roues (7) d'entraînement des éléments porteurs sont mutuellement reliées au moyen d'un arbre (36) mécanique.

22. Convoyeur selon l'une des revendications 1 à 21, **caractérisé en ce que** la courroie (21) porteuse réalisée sous forme de courroie dentée présente sur le dessous, à côté de régions (22) dentées pour l'entraînement de la courroie (21) porteuse, des régions (24) lisses qui reposent sur les rouleaux (4) porteurs afin de supporter la charge reposant sur la courroie (21) porteuse.

23. Convoyeur selon l'une des revendications 1 à 22, **caractérisé en ce que** la région (22) dentée est pourvue d'une denture normalisée.

24. Convoyeur selon l'une des revendications 1 à 23, **caractérisé en ce que** la région (22) dentée est pourvue d'une denture spéciale dans laquelle les largeurs des dents sont supérieures aux entredents.

25. Convoyeur selon l'une des revendications 1 à 24, **caractérisé en ce que** les régions dentées de la courroie (21) porteuse réalisée sous forme de courroie dentée sont reçues dans des rainures, s'étendant dans la direction du pourtour, des roues (7) d'entraînement et/ou des rouleaux (4) porteurs.

26. Convoyeur selon l'une des revendications 1 à 25, **caractérisé en ce que** la courroie (21) porteuse est pourvue de renforcements (31) augmentant la résistance à la traction.

27. Convoyeur selon la revendication 26, **caractérisé en ce que** les renforcements (31) sont constitués de fil d'acier incorporé, de Kevlar ou d'un tissu de matériaux résistants à la traction de ce type ou différents.

28. Convoyeur selon l'une des revendications 1 à 27, **caractérisé en ce que** la courroie (21) porteuse est pourvue d'un dessus augmentant la traction.

29. Convoyeur selon la revendication 28, **caractérisé en ce que** le dessus de la courroie (21) porteuse est doté d'un profil (30) à la manière d'un pneumatique d'automobile.

30. Convoyeur selon la revendication 29, **caractérisé en ce que** le profil (30) est conçu de telle sorte que la traction est maximale en direction longitudinale et minimale en direction transversale.

31. Convoyeur selon les revendications 29 et 30, **caractérisé en ce que** le profil (30) est réalisé en forme de flèche, en forme de demi-lune, continûment rectiligne ou interrompu.

32. Convoyeur selon l'une des revendications 1 à 31, **caractérisé en ce que** les rouleaux (4) porteurs et/ou les roues (7) dentées d'entraînement sont réalisés avec des anneaux d'épaulement pour guider la courroie (21) porteuse et/ou le porte-charge (34).

33. Convoyeur selon l'une des revendications 1 à 32, **caractérisé en ce que** les roues (7) dentées d'entraînement sont réalisées convexes, trapézoïdales ou convexes-cylindriques.

34. Convoyeur selon l'une des revendications 1 à 33, **caractérisé en ce que** les unités (33) de convoyage de structure modulaire peuvent être, dans l'état complètement pré-assemblé et après contrôle final, réunies au lieu d'utilisation pour former le convoyeur.

35. Convoyeur selon l'une des revendications 1 à 34, **caractérisé en ce que** les barres (3) - dans lesquelles sont montés les rouleaux (4) porteurs pour la courroie (21) porteuse - et les profilés (2) porteurs peuvent être raccourcis, de sorte que la longueur des unités (33) de convoyage est variable.

36. Convoyeur selon l'une des revendications 1 à 35, **caractérisé en ce que** les montants des unités (33) de convoyage peuvent être, à leurs extrémités en vis-à-vis, mutuellement reliés par des tôles pourvues de perçages de fixation en quadrillage.

37. Convoyeur selon l'une des revendications 1 à 36, **caractérisé en ce que** les tôles sont évidées au niveau des ouvertures en C des montants.
